(19) **Europäisches Patentamt / European Patent Office / Office européen des brevets**

(11) **EP 2 103 925 B1**

(12) **EUROPEAN PATENT SPECIFICATION**

(45) Date of publication and mention
of the grant of the patent:
**04.09.2019 Bulletin 2019/36**

(51) Int Cl.:
*G01N 21/64* (2006.01)   *G06T 5/50* (2006.01)

(21) Application number: **09250636.9**

(22) Date of filing: **05.03.2009**

(54) **Multi-exposure imaging for automated fluorescent microscope slide scanning**

Bildgebung mit mehrfacher Belichtung zur automatischen
Fluoreszenzmikroskop-Objektträgerabtastung

Imagerie multi-exposition pour balayage automatique de lames pour microscope à fluorescence

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **21.03.2008 US 53515**

(43) Date of publication of application:
**23.09.2009 Bulletin 2009/39**

(73) Proprietor: **Leica Biosystems Imaging Inc.
Vista CA 92081 (US)**

(72) Inventor: **SHIELDS, Kevin
Tyne and Wear
NE25 8JH (GB)**

(74) Representative: **D Young & Co LLP
120 Holborn
London EC1N 2DY (GB)**

(56) References cited:
**EP-A1- 1 225 756    WO-A2-2008/019299
US-A- 5 548 661    US-A- 5 880 473**

**Description**

BACKGROUND OF THE INVENTION

The present invention relates to a method and a system for generating a composite image from multiple images which have a large variation in pixel value brightness, such as, for instance, microscope slides containing fluorescently stained material. In particular, the present invention provides a method and a system for imaging and combining multiple exposure images into a single well contrasted image while ensuring that the areas of low fluorescent intensity and of high fluorescent intensity are combined in such a way as to preserve good contrast on the entire combined image.

Fluorescent microscopy has become an essential tool in biomedical sciences due to its superb contrasting capability that is not readily available with the traditional optical microscopy. Fluorescent microscopy is based on the underlying physical phenomenon of fluorescence, which is a property of some materials to shift the light wavelength between the incoming, i.e. specimen excitation, light spectrum and the outgoing, i.e. specimen emission, light spectrum. The emission of light through the process of fluorescence is nearly simultaneous with the excitation due to a relatively short time delay between photon absorption and emission. The delay is usually less than a microsecond in duration.

Other inorganic specimens were found to fluoresce when irradiated with ultraviolet excitation light. Subsequently, a discovery was made of a class of biological fluorescents which selectively bind to cell components in the tissue thus "staining" them. These biological fluorescent "stains" are also called fluorochromes. Different fluorochromes are often highly specific in their propensity to bind to the cell components. An array of these biological fluorochromes can be distributed over a biological specimen as to tag and distinguish cells and cellular components, making possible their optical identification with a high degree of specificity. The widespread growth in the use of fluorescence microscopy is closely linked to the development of the new synthetic fluorochromes and the discovery of the naturally occurring fluorochromes. These fluorochromes have known excitation and emission bandwidths, and their biological binding targets are well defined.

Capturing a well contrasted, in-focus fluorescent image of the microscopic slide is a non-trivial task. In addition to wavelength differences in the excitation and emission light, the intensity of the emitted fluorescent light is usually several orders of magnitude weaker than that of the excitation light. Therefore, it is desirable to separate the much weaker emission light from the excitation light. This is usually achieved through the use of the specific wavelength filters within a fluorescent microscope system (described in the Detailed Description of the Invention). However, even the best filtering of the excitation and the background light still results in the digital images of the fluorescent slides that have a high dynamic range of the intensities. Such high dynamic range can exist within individual digital frames; across multiple digital frames; as well as across multiple fluorescent sample slides. The manual adjustments of the exposure time and focus would be a highly impractical solution for at least two reasons. First, since the stains have a limited life-time (which actually decreases with the intensity of the incoming excitation light) there is no room for the time consuming adjustments of the focus and exposure time. Second, the modern biology diagnostic labs require the high-throughput, unattended, automatized methods for the acquisition of the in-focus, well contrasted images. That requirement is incompatible with the slow and laborious manual image acquisition adjustments.

The need for the well focused and well contrasted fluorescent digital images has been recognized in the imaging industry for some time. Some existing methods attempt to calibrate the acquired digital images to an identical level of brightness and contrast, followed by an integration of the pixel intensity values across each image in order to arrive at the fluorescent stains' concentration in the cell. However, this method results in an average, across the image stain concentration value, and not in a properly contrasted image with well preserved areas of the low and high fluorescent intensities.

Some other existing methods deal only with the auto-focusing of the fluorescent imaging system by analyzing the pixel intensity statistics either over the entire image or over the multiple sub-regions of the image. The auto-focus calculations are based on the pixel intensity values. Proper focus value is chosen such that it maximizes either the global or the local digital image contrast value. Therefore, those methods determine an optimal focus position based on the entire slide or a sub-region of the slide, which helps achieve a proper focusing on the fluorescent image, but the methods still do not produce a well contrasted composite image of the slide.

Yet some other methods record digital images before and after staining the slides with fluorochromes. Next, the images obtained before and after staining are compared pixel by pixel. If the pixel intensity difference exceeds a certain pre-established threshold, then that pixel is declared to indicate the location of a stain. Thus, a binary map of pixels is established over the image: no stain in the pixel location or stain present in the pixel location. That method at best results in a map of stain locations over the slide, but all the contrast and intensity variations over the slide are lost in the process.

Some other methods use multiple images to arrive at a composite image of a single slide. However, those methods perform straight forward averaging of the corresponding pixel intensities over the multiple exposures. The pixel intensities are typically scaled by a fixed coefficient across the entire image in order to avoid the summation caused overflow, but no intelligent weighting is done while arriving at the pixel intensity average. Therefore, those methods also do not produce the desired well contrasted digital image of the slide.

WO 2008/019299 A2 discloses a system for performing image processing for analyzing the results of a fluorescence in situ hybridization (FISH) microscopic automated sample analysis to determine specific chromosomal characteristics.

EP 1 225 756 discloses a method of creating an image obtained from a camera to obtain a substantially linear representation of the brightness of the image. The method includes, for each of a set of pixels (x, y) in a two dimensional array, calculating an estimate of the image intensity as a weighted average of multiple samples of the apparent image intensity using a weighting factor which is defined to maximise the signal-to-noise ratio and discard insignificant, that is saturated or near zero, values.

Thus, there exists a need for systems and methods of automated fluorescent image auto-focusing and digital image acquisition that can produce a well contrasted image while preserving the areas of low and high fluorescent intensities on the fluorescent slide.

BRIEF SUMMARY OF THE INVENTION

Aspects of the invention are set out in the appended claims.

The present invention provides methods and systems for the acquisition of the digital images of a microscope slide which can have a large variation in pixel value brightness, like, for instance, fluorescent microscope slides. Multiple images of the microscope slide are acquired at differing exposure times. A weighted sum of pixel intensities is formed from the images, where the weight given to each pixel is calculated from the localized contrast values around that pixel. A higher weighting can be given to those pixels that have higher localized contrast values. The methods and the systems can produce a well contrasted composite image with the areas of low fluorescent intensity and the areas of high fluorescent intensity at the input images being preserved on the composite image. In conjunction with the multiple image acquisition methods and systems, an auto-focusing method based on multiple exposures of the slide can be used to determine appropriate focal values for the image acquisition.

In one aspect, a method of forming an image of a fluorescent microscope slide includes: acquiring an image of a fluorescent microscope slide at a first exposure level resulting in a first acquired image at a first contrast level; acquiring additional images of the fluorescent microscope slide each at an exposure level different from each other and different from the first exposure, resulting in different acquired images at different contrast levels; and forming a composite image of the fluorescent microscope slide by forming a weighted sum of the intensity values of the corresponding pixels of each of the images, whereby the composite image has a composite contrast level over the entire composite image that represents a weighted average of the contrast levels, wherein the weight given to each of the pixels of each of the images is calculated from a localized contrast measure around that pixel.

According to a preferred embodiment, a higher weight is given to a pixel whose localized contrast is higher.

In another aspect, a method of forming an image of a fluorescent microscope slide includes: using multi-exposure auto-focus at one or more points spaced at or around one or more sub-areas within the microscope slide; generating a map of auto-focus values per sub-areas of the microscope slide; acquiring an image of a fluorescent microscope slide using the map of auto-focus values at a first exposure level resulting in a first acquired image at a first contrast level; acquiring additional images of the fluorescent microscope slide using the map of auto-focus values, where the images acquired at an exposure level are different from each other and different from the first exposure, resulting in different acquired images having different contrast levels; forming a composite image of the fluorescent microscope slide by forming a weighted sum of the intensity values of each corresponding pixels of each of the images, whereby the composite image has a composite contrast level over the entire composite image that represents a weighted average of the contrast levels, wherein the weight given to each of said pixels of each of said images is calculated from a localized contrast measure around that pixel.

In yet another aspect, a fluorescent image system includes: a source of illumination; a microscope system; a CCD camera for acquiring digitized images of a fluorescent microscope slide; and a computing unit for storing and processing the digitized images. The computing unit executes a method so as to cause: a CCD camera image of the fluorescent microscope slide to be acquired at a first exposure level resulting in a first contrast level; additional images of the fluorescent microscope slide to be acquired each at an exposure level different from each other and different from the first exposure, resulting in different contrast levels; a composite image of the fluorescent microscope slide to be formed as a weighted sum of the intensity values of each corresponding pixels of each of the images, whereby the composite image has a composite contrast level over the entire composite image that represents a weighted average of the contrast levels.

For a further understanding of the nature and advantages of the invention, reference should be made to the following description taken in conjunction with the accompanying figures. It is to be expressly understood, however, that each of the figures is provided for the purpose of illustration and description only and is not intended as a definition of the limits of the embodiments of the present invention.

BRIEF DESCRIPTION OF THE DRAWINGS

Fig. 1 illustrates a schematic diagram of an epi-illuminated fluorescence microscope system.

Fig. 2 illustrates a schematic diagram of a trans-illuminated fluorescence microscope system.

Fig. 3 shows a flowchart of the image acquisition and a composite image creation, in accordance with one embodiment of the present invention.

Fig. 4 shows input images and a blended output image obtained in accordance with one embodiment of the present invention.

Fig. 5 shows a flowchart of a method for auto-focusing which uses multiple exposures.

Fig. 6 shows a flowchart of Ariol system's imaging method.

DETAILED DESCRIPTION OF THE INVENTION

The embodiments of the present invention are directed towards methods and systems for the image acquisition and its related postprocessing using multiple images acquired at different exposure times. The present invention is especially well suited for the microscope slides that have large variation in brightness, like, for instance, fluorescent microscope slides. The present invention generates a well focused and well contrasted composite image from the images acquired at different exposure times.

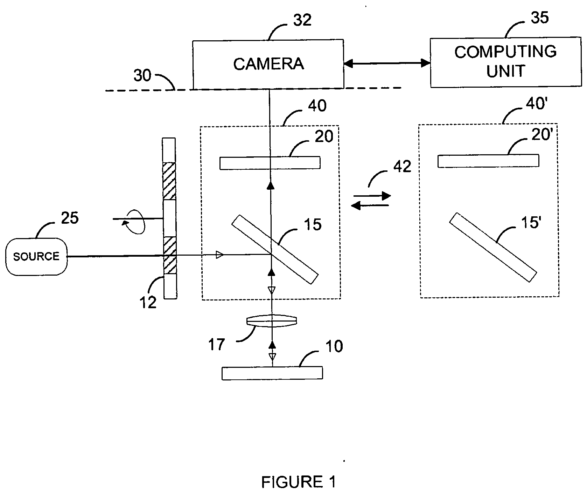

The details of an exemplary embodiment of the present invention are explained with reference to Figs. 1-6. The exemplary embodiment is described with reference to fluorescent microscope slides, but it will be clear to a person skilled in the art that the present invention can be used for other types of slides having large variations in brightness.

Fig. 1 shows an epi-illuminated fluorescence system which is used for acquiring and storing digital images of the microscopic fluorescent slides. As explained above, one of the problems in capturing well contrasted digital images of the fluorescent slides is that the intensity of the emitted fluorescent light is usually several orders of magnitude weaker than that of the excitation light. Therefore, it is desirable to prevent the excitation light from reaching the camera sensor. This is usually achieved by selective wavelength filtering because the excitation and emission light have different wavelengths. The selective wavelength filtering separates the much weaker emission light from the much stronger excitation light, while also directing the emission light to the camera sensor. The details of the filtering scheme that can be used in a fluorescent microscope system are explained below. The fluorescent microscope system has source of light 25 (usually a mercury or a xenon lamp) which contains the stain excitation wavelengths. The light from source 25 passes through excitation wavelength filter 12, which can be one of the several filters on a rotatable filter wheel. Wavelength filter 12 transmits the light wavelength band needed for a particular stain excitation, while blocking other wavelengths. Wavelength based optical filters are widely known, and a person skilled in the art would know how to choose a filter with the required characteristics. After passing through excitation wavelength filter 12, the filtered light from the source 25 next impinges on dichromatic beamsplitting mirror 15, which is a specialized interference filter that efficiently reflects the shorter wavelengths and efficiently transmits the longer wavelengths. (The excitation light is denoted by the open arrows, while the emission light is denoted by the solid arrows.) The dichromatic beamsplitting mirror 15 is tilted at 45° angle with respect to the incoming excitation light. Since the incoming filtered excitation light has a shorter wavelength, it is reflected by beamsplitting mirror 15 toward objective lens 17, which focuses the excitation light onto fluorescence microscope slide 10. After being illuminated with the light at the excitation wavelength, the stains in slide 10 emit the light at the emission wavelength, which is longer than the excitation one. The emission light travels through objective lens 17, and impinges onto dichromatic beamsplitting mirror 15, which was selected such as to pass longer wavelengths through and toward barrier filter 20. It should be noted that the selection of a specific beamsplitting mirror 15 is dictated primarily by the excitation and emission wavelengths, which are stain dependent. Most of the excitation light that was scattered off slide 10 or other parts of the setup toward beamsplitting mirror 15 is reflected back toward light source 25, but a minute quantity often passes through. Since the intensity of the excitation light is much stronger than that of the emission light, even a very small percentage of the scattered excitation light reaching the camera could contaminate the image. Therefore, the role of barrier filter 20 is to selectively transmit light at the excitation wavelength toward image plane 30 of digital camera 32, while blocking the scattered excitation light. An image is formed on image plane 30, and is acquired by digital camera 32. Once the image is captured by digital camera 32, it can be transferred to computing unit 35 for storage and further processing.

The pairs of dichromatic beamsplitting mirror 15 and barrier filter 20 are typically assembled into optical blocks (often called the cubes), which can be easily interchanged to achieve the proper, stain dependent filtering of the excitation and emission light. This interchangeability of cubes 40 and 40' is denoted with arrows 42. Sometimes excitation wavelength filter 12 is added to the cube configuration, thus making filter 12 also interchangeable by replacing cube 40.

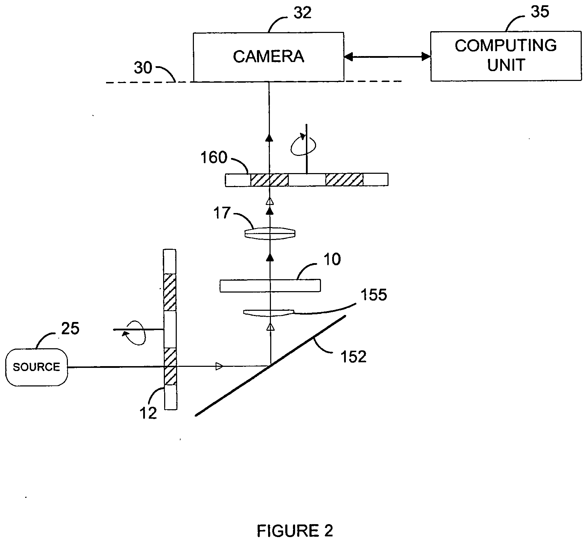

Epi-illuminated fluorescence systems typically can produce images with very high brightness levels. However, the design and manufacturing of a dual bandwidth filter, like dichromatic beamsplitting mirror 15, can be difficult and expensive. Also, multiple cubes may be needed in the fluorescent microscope system like the one shown in Fig. 1, each cube having different dichromatic mirror. Therefore, a fluorescent microscope system like the one depicted in Fig. 2 is sometimes used, because it uses only the single bandwidth filters, which are less expensive. This type of the microscope system is known as the trans-illumination fluorescence system. Here, source 25 emits excitation light that passes through rotatably mounted excitation wavelength filter 12. The excitation light is reflected by mirror 152; it passes through condenser lens 155; and then it impinges on microscope slide 10. The light at both the excitation wavelength (denoted by solid arrows) and the emission wavelength (denoted by open arrows) passes through objective 17. Rotatably mounted emission wavelength filter 160 selectively transmits the emission wavelength of the interest, i.e. the one that was emitted by the stain of interest. An image is formed on image plane 30, and is acquired by digital camera 32. The image can now be transferred to computing unit 35 for storage and further processing. Notice that the role of the cube from the epi-illuminated microscope system, as illustrated on Fig. 1, is replaced by a plurality of emission filters 160 that can be mounted on a rotating wheel. No dual band filter, as in dichromatic beamsplitting mirror 15, is needed. One disadvantage of the trans-illumination fluorescence system is that the illumination is not as bright as with epi-illumination system because condenser 155, which has a lower numerical aperture than the objective 17, is used to focus the light onto the sample. However, an appropriately chosen exposure level can alleviate this disadvantage, as explained in detail below.

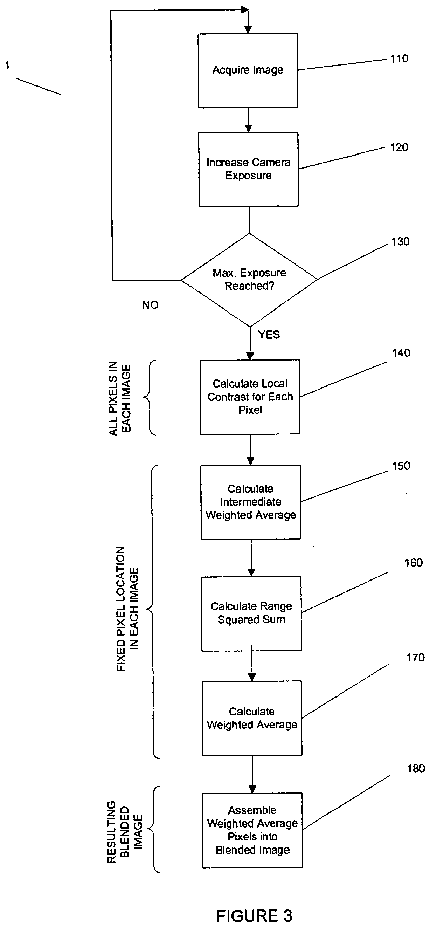

Where multiple stains are used, and especially in multi-tissue setting, the camera exposure setting for one stain may not be preferred for another stain. For example, the exposure setting which is suitable for one stain or one type of tissue may be too low for another stain or tissue, resulting in a poorly defined tissue on the image and also in the inability to focus on the under-exposed stain. Conversely, an appropriate exposure for one stain or tissue may lead to an overexposure for another one, resulting in the pixel intensity overflow, inability to clearly identify the tissue, and also an out of focus image. Even with a single stain, the appropriate exposure duration is not known a-priori, and the problems with the appropriate exposure can persist. A method for overcoming the underexposure and overexposure difficulties described above is illustrated with reference to Fig. 3, which describes image acquisition and postprocessing according to one embodiment of the present invention. Such a method may be computer-implemented and executed by computing unit 35. Fluorescent microscope slide imaging is used to explain the method, but other microscope slides having large variation in brightness can also be used with the method. An epi-illumination or trans-illumination or a similar system can be used with the method.
At step 110 a digital camera acquires an image of the tissue. The image of an entire microscope slide or of a particular sub-region of the slide can be acquired. A low exposure time is used when step 110 is executed for the first time. Step 110 will be repeated for the appropriate number of times, based on the decision mechanism explained below. Digital images are saved in a processing unit, like, for instance, processing unit 35 in Figs. 1 or 2.
At step 120 the camera exposure time is increased. Good exposure values that would result in good image contrast, are not known a-priori. Therefore, the method starts at some predefined low exposure time, and then increases the exposure time of the camera for every subsequent image acquisition.
At step 130 a check can be performed to verify if the predetermined maximum exposure value is reached. If the predetermined maximum exposure value is not reached, then another image of the slide or the sub-region of the slide is acquired in step 110. If the maximum exposure value is reached, then the method exits the loop, and proceeds to step 140.
At step 140 the stored digital images are accessed and processed by, for example, processing unit 35. A variation is calculated over a pre-defined neighborhood of the pixel for each pixel in the image. Typically, a 21 X 21 pixel area is centered over the pixel of interest, but other suitable pixel areas may be used, as long as the resulting blended images end-up having good smoothing of the pixel intensities. In the alternative, a localized histogram around a pixel can be generated, and a variance of the histogram per pixel is measured and smoothed using the process described below.
Special treatment is accorded to the pixels close to the boundary of the image. For instance, for a pixel that is only 8 pixels away from the right hand boundary of the image, a corresponding 17 X 21 pixel area can be defined to calculate the relevant values. For a pixel that is only 6 pixels away from the upper boundary of the image, a corresponding 21 X 13 pixel area can be defined. Methods of image edge treatment are well known to a person skilled in the art of image processing, and such a person would know of a variety of suitable edge treatments. Further details of step 140 are set forth below.
First, the difference between the brightest and the darkest pixel within the 21 X 21 pixel area is found. The difference is called Range Image, or RI for short. There is one RI value for each pixel in every image. Next, still at step 140, a Smoothed Range Image, or SRI for short, is calculated by finding a mean value of all the RI values per pixel in the 21 X 21 area centered around that pixel. This is done by summing up all of the RI values in the 21 X 21 pixel area, and dividing the resulting sum by 441 (i.e., 21 x 21). The process is repeated for other pixels in that image, and then for the pixels in the remaining images.
Eqs. 1 and 2 show the high level algebra involved in step 140. The equations below should be understood as a high level algorithm of the image processing in the present invention, and not as a rigorous, self-contained mathematical implementation. A person skilled in the art would know a variety of computer coding implementations for the high level algorithm below.

In the first step of the algorithm, Range Image is calculated for every pixel in every image:

$$RI = \left| MAX(I_{i,j} - I_{k,l}) \right| \qquad (1)$$

, where I is a pixel value (i.e. brightness or light intensity at that location), i,j and k,l are pixel indices belonging to the same 21 X 21 pixel region.

Next, Smoothed Range image is calculated according to Equation below.

$$SRI = \frac{1}{N*N} \sum_{i=1}^{N} \sum_{j=1}^{N} RI_{i,j} \qquad (2)$$

, where N=21 for the non-edge pixel.

Still at step 140, Range Squared (RS) is determined by calculating SRI$^2$ (SRI multiplied by itself) for all pixels in each of the images. Thus, for every pixel in every image:

$$RS = SRI * SRI \qquad (3)$$

The per-pixel RS values are stored for every image inside computing unit 35. The above RS values are used in the subsequent smoothing by preventing the undesired transitions that otherwise may be artificially introduced in the final blended image if the weighted sum includes image data exclusively from one image.

In steps 150 - 170, the calculations are done over a fixed pixel location in each of the images from the input set. Once the calculations in steps 150 - 170 are completed for a particular pixel location, they are repeated for the next pixel. At step 150, pixel light intensity values at a fixed pixel location are multiplied by Range Squared (RS), and summed over all the images. The resulting per pixel value is called Intermediate Weighted Average or IWA. Thus, for a fixed pixel location over all the images:

$$IWA = \sum_{g=1}^{M} RS_g * I_g \qquad (4)$$

, where M is the number of input images that are used to produce a smoothed image, and the subscript 'g' denotes marching over the images for a fixed pixel location.

At step 160, Range Squared (RS) values are summed-up over all the images for the same fixed pixel location to arrive at the Range Squared Sum (RSS) value, as shown in Equation (5) below:

$$RSS = \sum_{g=1}^{M} RS_g \qquad (5)$$

At step 170, the final per pixel step, Intermediate Weighted Average (IWA) is divided by Range Square Sum (RSS) to calculate Weighted Average (WA).

$$WA = \frac{IWA}{RSS} \qquad (6)$$

The result of Eq. 6 is a smoothed light intensity value for one pixel location in a 2-D image. The process outlined in Eqs. 3-6 is now repeated for the next fixed pixel location, as many times as there are pixels in the image.

At step 180 the weighted pixel values for the same pixel location in all the images are assembled into a composite image. This step produces a single blended output image that is well contrasted over the areas of both low and high fluorescent intensities.

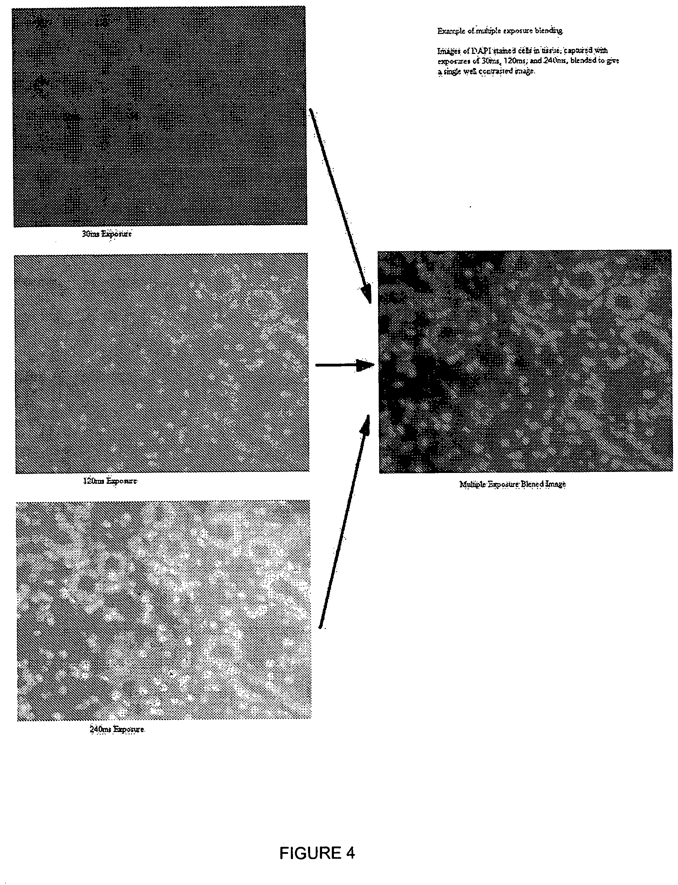

A set of input and resulting images is shown in Fig. 4. The three input images in Fig. 4 suffer from distinct shortcomings. The image on the top (30 ms exposure) is underexposed, therefore the stains can not be clearly identified. The middle input image (120 ms exposure) has a proper exposure, but the contrast is too low for the stain identification. The image at the bottom (240 ms exposure) is overexposed, thus making the background area behind the stains too bright for the subsequent processing. When image smoothing as described in Fig. 3 and Eqs. 1-6 is employed on the three input images, the resulting blended image shown on the right hand side of Fig. 4 is produced. This blended image has a proper combination of contrast and exposure to enable a more effective stain identification in subsequent lab processing.

It is to be understood that the method as described above with reference to Fig. 3 can also be executed over sub-regions of fluorescent microscope slides. A manual or automatic method of defining the sub-regions of interest can be used in conjunction with the method. The use of the method per a sub-region of a slide is usually done when the particular sub-region contains a tissue area of interest. Alternatively, the sub-regions can be defined based on their relative content of the stains. Many other methods of defining sub-regions can be used.

The method described above with reference to Fig. 3 can be performed in conjunction with auto-focusing. A properly focused microscope system enables the capturing of the images at the highest contrast values, which, in turn, improves the quality of the output blended image. Performing a manual focus would be a tedious work that is not well suited for a highly automatized image acquisition process. On the other hand, using a predetermined fixed focal value for different slides could result in the inaccurate focus for some stains, because their true depth position can differ from slide to slide. Therefore, in conjunction with the multiple image acquisition methods and systems, an auto-focusing method based on multiple exposures of the slide can be used to set the proper focal values for the image acquisition.

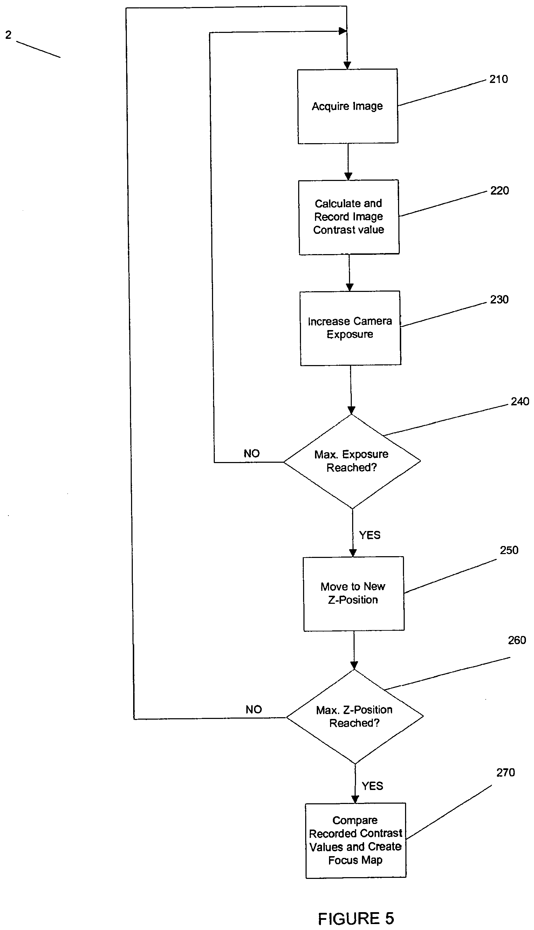

Fig. 5 shows an auto-focus method according to one embodiment of the present invention. The method is applicable to either epi-illuminated or trans-illumination fluorescence systems, and also to other bright field image acquisition systems.

At step 210 a digital image is acquired at one exposure and one z-position of the objective lens. If the focal value of the entire slide is wanted, then the image of the entire slide is acquired. Alternatively, if the focal value of a particular sub-region of the slide needs to be determined, then an image of that sub-region is acquired.

At step 220 the contrast value of the acquired image is calculated. A person skilled in the art would know a number of methods to calculate contrast of an image. For example, a strip of pixels could be selected from the image to calculate differences between the neighboring pixels. The sum of the pixel intensity differences can be representative of contrast. Alternatively, a two-dimensional region of the image or even the entire image can be used to calculate pixel-to-pixel intensity differences. Calculations can be done by comparing pixel intensity not only against the immediate neighbors of that pixel, but also against the more distant pixels. Thus, a numerical value of the contrast, representing the goodness of the focus, is calculated, and is saved for the future processing. Higher contrast indicates a better focus for the images acquired over the same area of the slide.

At step 230 the next longer value of the camera exposure is chosen.

At step 240 the comparison is made between the exposure time at step 210 and the predetermined maximum exposure time. If the maximum exposure time is not reached yet, then another image per step 210 is acquired. If the maximum exposure time is already reached, then no new images are acquired at this z-position of the lens. Instead, step 250 of the method is executed.

At step 250 the lens is focused on the next z-position.

At step 260 a comparison is made between the present z-position of the lens and the predetermined value of the maximum z-position value, and an image per step 210 is acquired. If the maximum z-position value is not reached yet, then the lens is focused to the next z-position. If the maximum z-position value is reached, then no new images need to be acquired.

At step 270 the numerical values of the image contrast, which were obtained at step 220, are compared. A higher contrast value corresponds to a better focus. If the entire slide was imaged, then the highest value of the contrast will determine the best z-position for the focus. For the sub-region focusing, a focus map of per sub-region focal values can be created. The focal values can be used to pre-adjust the focus when acquiring digital images as in the method described with reference to Fig. 3 above.

It will be clear to a person skilled in the art that many variations of the above described auto-focus method can be used. For example, the relative order of the exposure and z-position steppings can be exchanged, i.e. a single exposure time can be followed by a series of z-position settings before the exposure time is updated to a new value. Method steps do not necessarily have to be executed from the shortest exposure time to the longest, or from the closest lens z-position to the farthest. The order can be inverted, or some other order can be used.

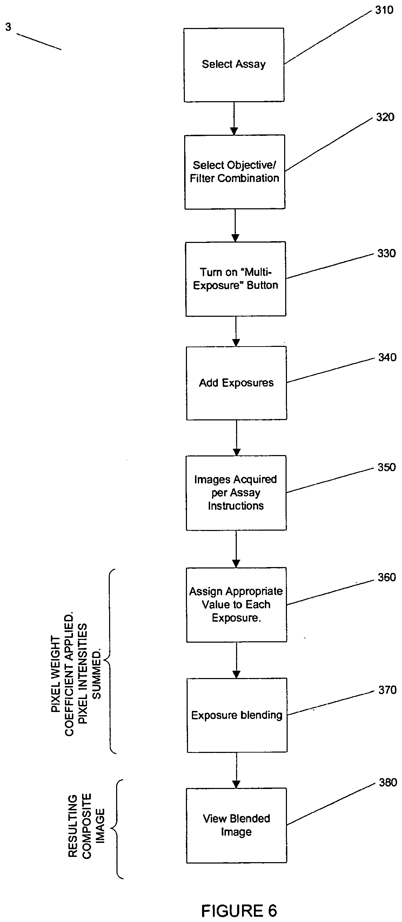

The present invention may be embodied in an automated image capturing systems, like, for instance, the Ariol Image Capturing System, which can be used to analyze a wide range of brightfield and fluorescent slides. The description below is given with reference to the epi-illuminated fluorescence microscope system, but the Ariol Image Capturing System can also be used with the trans-illumination fluorescence microscope system. The description of the image acquisition and analysis is given below with reference to Fig. 6, but many variations of the method are also possible in connection with the methods described in Figs. 3 and 5.

At step 310 an assay is selected. This is a one-off configuration step where the stains, the objective/fluorescent filter combinations, the number of exposures, whether to blend the exposures or to keep them separate, and other configuration inputs are defined. The assay also defines how a slide is scanned and can include multiple passes, e.g. a pre-scan pass over the whole slide using an algorithm to automatically find tissue areas; a focus-only scan to build up a focus map; and a main-scan pass over the tissue areas found above, using focus map information from the focus-only pass. The main-scan captures the digital images of the tissue at different exposures, and blends them into a composite well contrasted image.

At step 320 the objective/filter combination is selected for the multi-exposure digital image capture.

At step 330 the user turns on the multi-exposures toggle button to tell the system to acquire multiple exposures at every slide or a sub-region of the slide.

At step 340 the user adds the required number of exposures by, for example, clicking on "add" button repeatedly until the required number of exposures is set.

At step 350 the images are acquired as per assay instructions. The images are now available for the analysis.

At step 360 the operator highlights each exposure in the exposure list and enters appropriate values per exposure. Inappropriate exposures, too high or too low, result in black or white saturation, both producing low weighting coefficients as the localized histogram variations will be small in either the black or the white saturation. Manually selected exposures are what the operator would expect to be the typical range of exposures that covers the expected intensity variation in the sample.

At step 370 operator turns on the "exposure-blending" toggle button. The images are now combined into a single well contrasted image as explained with reference to Fig. 3 at steps 140 to 170.

At step 380 the composite well contrasted image is available for viewing and analysis.

## Claims

1. A method of forming an image of a fluorescent microscope slide (10), comprising:

   acquiring an image of a fluorescent microscope slide (10) at a first exposure level resulting in a first acquired image at a first contrast level; acquiring at least one additional image of said fluorescent microscope slide each at an exposure level different from each other and different from the first exposure, resulting in different acquired images at different contrast levels; and **characterized by**: forming a composite image of said fluorescent microscope slide by forming a weighted sum of the intensity values of corresponding pixels of each of said images, whereby said composite image has a composite contrast level over the entire composite image that represents a weighted average of said contrast levels, wherein the weight given to each of said pixels of each of said images is calculated from a localized contrast measure around that pixel.

2. A method of forming an image of a fluorescent microscope slide (10), comprising:

   using multi-exposure auto-focus at one or more points spaced at or around one or more sub-areas within said microscope slide; generating a map of auto-focus values per sub-area of said microscope slide; acquiring an image of a fluorescent microscope slide using said map of auto-focus values at a first exposure level resulting in a first acquired image at a first contrast level; acquiring additional images of said fluorescent microscope slide using said map of auto-focus values, said images acquired at an exposure level different from each other and different from the first exposure, resulting in different acquired images having different contrast levels; and forming a composite image of said fluorescent microscope slide by forming a weighted sum of the intensity values of corresponding pixels of each of said images, whereby said composite image has a composite contrast level over the entire composite image that represents a weighted average of said contrast levels, wherein the weight given to each of said pixels of each of said images is calculated from a localized contrast measure around that pixel.

3. The method of claim 1 or 2 wherein a higher weight is given to a pixel whose localized contrast is higher.

4. The method of claim 1 or 2 wherein the localized contrast measure is determined over a pre-defined sub-area of an image including said pixel.

5. The method of claim 4 further comprising forming a range image for each image acquired at said exposure levels, wherein the range image is a difference between the brightest and the darkest pixel in the pre-defined sub-area.

6. The method of claim 5 wherein said range image is processed to determine said localized contrast measure.

7. A fluorescent image system comprising:

   a source of illumination (25); a microscope system; a CCD camera (32) for acquiring digitized images of a fluorescent microscope slide (10); a computing unit (35) for storing and processing said digitized images, said computing unit being configured to execute a method so as to cause:

   a CCD camera image of said fluorescent microscope slide to be acquired at a first exposure level resulting in a first contrast level; additional images of said fluorescent microscope slide to be acquired each at an exposure level different from each other and different from the first exposure, resulting in different contrast levels; the system being **characterized by** said computing unit further being configured to execute a method to cause: a composite image of said fluorescent microscope slide to be formed as a weighted sum of the intensity values of corresponding pixels of each of said images, whereby said composite image has a composite contrast level over the entire composite image that represents a weighted average of said contrast levels, wherein the weight given to each of said pixels of each of said images is calculated from a localized contrast measure around that pixel.

8. The system as in claim 7 wherein said microscope system comprises an epifluorescence system comprising:

one or more excitation wavelength filters (12);
a dichroic mirror (15);
a system of lenses for directing a light beam;
one or more emission wavelength filters; and
a microscope objective (17).

9. The system as in claim 7 wherein said microscope system comprise a trans-illuminating system comprising:

one or more excitation wavelength filters (12);
a mirror (152);
a system of lenses (155) for directing a light beam;
one or more emission wavelength filters (160); and
a microscope objective (17).

10. The system as in claim 7 wherein a higher weight is given to a pixel whose localized contrast is higher.

11. The system as in claim 7 wherein the localized contrast measure is determined over a pre-defined sub-area of an image including said pixel.

12. The system as in claim 11 wherein said computing unit executes a method so as to form a range image for each image acquired at said exposure levels, wherein the range image is a difference between the brightest and the darkest pixel in the pre-defined sub-area.

13. The system as in claim 7 wherein said computing unit is configured to use a map of auto-focus values to adjust said CCD camera focus per said slide area; said map created by multi-exposure auto-focus at one or more points spaced at or around one or more sub-areas within said microscope slide.

**Patentansprüche**

1. Verfahren zum Ausbilden eines Bilds eines Fluoreszenzmikroskop-Objektträgers (10), umfassend:

Erfassen eines Bilds eines Fluoreszenzmikroskop-Objektträgers (10) mit einem ersten Belichtungspegel, was zu einem ersten erfassten Bild mit einem ersten Kontrastpegel führt;
Erfassen mindestens eines zusätzlichen Bilds des Fluoreszenzmikroskop-Objektträgers jeweils mit einem voneinander verschiedenen und von der ersten Belichtung verschiedenen Belichtungspegel, was zu verschiedenen erfassten Bildern mit verschiedenen Kontrastpegeln führt; und **gekennzeichnet durch**:
Ausbilden eines Kompositbilds des Fluoreszenzmikroskop-Objektträgers durch Ausbilden einer gewichteten Summe der Intensitätswerte von entsprechenden Pixeln jedes der Bilder, wodurch das Kompositbild einen Kompositkontrastpegel über das ganze Kompositbild besitzt, der ein gewichtetes Mittel der Kontrastpegel darstellt, wobei das jedem der Pixel jedes der Bilder gegebene Gewicht aus einem lokalisierten Kontrastmaß um dieses Pixel herum berechnet wird.

2. Verfahren zum Ausbilden eines Bilds eines Fluoreszenzmikroskop-Objektträgers (10), umfassend:

Verwenden von Mehrfachbelichtungs-Autofokus an einem oder mehreren Punkten, die an einem oder mehreren Teilbereichen oder um diese herum innerhalb des Mikroskopobjektträgers beabstandet sind;
Generieren einer Karte von Autofokuswerten pro Teilbereich des Mikroskopobjektträgers; Erfassen eines Bilds eines Fluoreszenzmikroskop-Objektträgers unter Verwendung der Karte von Autofokuswerten mit einem ersten Belichtungspegel, was zu einem ersten erfassten Bild mit einem ersten Kontrastpegel führt;
Erfassen zusätzlicher Bilder des Fluoreszenzmikroskop-Objektträgers unter Verwendung der Karte von Autofokuswerten, wobei die Bilder mit einem voneinander verschiedenen und von der ersten Belichtung verschiedenen Belichtungspegel erfasst werden, was zu verschiedenen erfassten Bildern mit verschiedenen Kontrastpegeln führt; und
Ausbilden eines Kompositbilds des Fluoreszenzmikroskop-Objektträgers durch Ausbilden einer gewichteten Summe der Intensitätswerte von entsprechenden Pixeln jedes der Bilder, wodurch das Kompositbild einen Kompositkontrastpegel über das ganze Kompositbild besitzt, der ein gewichtetes Mittel der Kontrastpegel darstellt, wobei das jedem der Pixel jedes der Bilder gegebene Gewicht aus einem lokalisierten Kontrastmaß um dieses Pixel herum berechnet wird.

3. Verfahren nach Anspruch 1 oder 2, wobei ein höheres Gewicht einem Pixel gegeben wird, dessen lokalisierter Kontrast höher ist.

4. Verfahren nach Anspruch 1 oder 2, wobei das lokalisierte Kontrastmaß über einen vordefinierten Teilbereich eines das Pixel enthaltenden Bilds bestimmt

**5.** Verfahren nach Anspruch 4, weiterhin umfassend das Ausbilden eines Range-Bilds für jedes mit den Belichtungspegeln erfasste Bild, wobei das Range-Bild eine Differenz zwischen dem hellsten und dunkelsten Pixel in dem vordefinierten Teilbereich ist.

**6.** Verfahren nach Anspruch 5, wobei das Range-Bild verarbeitet wird, um das lokalisierte Kontrastmaß zu bestimmen.

**7.** Fluoreszenzbildsystem, umfassend:

eine Beleuchtungsquelle (25);
ein Mikroskopsystem;
eine CCD-Kamera (32) zum Erfassen von digitalisierten Bildern eines Fluoreszenzmikroskop-Objektträgers (10);
eine Recheneinheit (35) zum Speichern und Verarbeiten der digitalisierten Bilder, wobei die Recheneinheit dazu ausgebildet ist, ein Verfahren auszuführen, um zu bewirken, dass:

ein CCD-Kamerabild des Fluoreszenzmikroskop-Objektträgers mit einem ersten Belichtungspegel erfasst wird, was zu einem ersten Kontrastpegel führt;
zusätzliche Bilder des Fluoreszenzmikroskop-Objektträgers jeweils mit einem voneinander verschiedenen und von der ersten Belichtung verschiedenen Belichtungspegel erfasst werden, was zu verschiedenen Kontrastpegeln führt;
wobei das System **dadurch gekennzeichnet ist, dass** die Recheneinheit weiterhin dazu ausgebildet ist, ein Verfahren auszuführen, um zu bewirken, dass:
ein Kompositbild des Fluoreszenzmikroskop-Objektträgers als eine gewichtete Summe der Intensitätswerte von entsprechenden Pixeln jedes der Bilder gebildet wird, wodurch das Kompositbild einen Kompositkontrastpegel über das ganze Kompositbild besitzt, der ein gewichtetes Mittel der Kontrastpegel darstellt, wobei das jedem der Pixel jedes der Bilder gegebene Gewicht aus einem lokalisierten Kontrastmaß um dieses Pixel herum berechnet wird.

**8.** System nach Anspruch 7, wobei das Mikroskopsystem ein Epifluoreszenzsystem umfasst, umfassend:

ein oder mehrere Erregungswellenlängenfilter (12);
einen dichroitischen Spiegel (15);
ein System von Linsen zum Lenken eines Lichtstrahls;

ein oder mehrere Emissionswellenlängenfilter; und
ein Mikroskopobjektiv (17).

**9.** System nach Anspruch 7, wobei das Mikroskopsystem ein Transilluminationssystem umfasst, umfassend:

ein oder mehrere Erregungswellenlängenfilter (12);
einen Spiegel (152);
ein System von Linsen (155) zum Lenken eines Lichtstrahls;
ein oder mehrere Emissionswellenlängenfilter (160); und
ein Mikroskopobjektiv (17).

**10.** System nach Anspruch 7, wobei ein höheres Gewicht einem Pixel gegeben wird, dessen lokalisierter Kontrast höher ist.

**11.** System nach Anspruch 7, wobei das lokalisierte Kontrastmaß über einen vordefinierten Teilbereich eines das Pixel enthaltenden Bilds bestimmt wird.

**12.** System nach Anspruch 11, wobei die Recheneinheit ein Verfahren ausführt zum Ausbilden eines Range-Bildes für jedes mit den Belichtungspegeln erfasste Bild, wobei das Range-Bild eine Differenz zwischen dem hellsten und dunkelsten Pixel in dem vordefinierten Teilbereich ist.

**13.** System nach Anspruch 7, wobei die Recheneinheit dazu ausgebildet ist, eine Karte von Autofokuswerten zum Verstellen des CCD-Kamerafokus pro Objektträgerbereich zu verwenden, wobei die Karte durch Mehrbelichtungs-Autofokus an einem oder mehreren Punkten angelegt wird, die an einem oder mehreren Teilbereichen innerhalb des oder dort herum beabstandet sind Mikroskopobjektträgers.

**Revendications**

**1.** Procédé de formation d'une image d'une lame (10) de microscope à fluorescence, comprenant :

l'acquisition d'une image d'une lame (10) de microscope à fluorescence à un premier niveau d'exposition se traduisant par une première image acquise à un premier niveau de contraste ;
l'acquisition d'au moins une image supplémentaire de ladite lame de microscope à fluorescence, chacune à un niveau d'exposition différent des autres et différent de la première exposition, se soldant par différentes images acquises à différents niveaux de contraste ; et **caractérisé par** :

la formation d'une image composite de ladite lame de microscope à fluorescence par formation d'une somme pondérée des valeurs d'intensité de pixels correspondants de chacune desdites images, ladite image composite ayant un niveau de contraste composite sur l'image composite entière qui représente une moyenne pondérée desdits niveaux de contraste, le poids donné à chacun desdits pixels de chacune desdites images étant calculé à partir d'une mesure de contraste localisé autour de ce pixel.

2.  Procédé de formation d'une image d'une lame (10) de microscope à fluorescence, comprenant :

    l'utilisation d'une mise au point automatique en exposition multiple à un ou plusieurs points espacés au niveau ou autour d'une ou plusieurs sous-zones à l'intérieur de ladite lame de microscope ;
    la création d'une carte de valeurs de mise au point automatique par sous-zone de ladite lame de microscope ;
    l'acquisition d'une image d'une lame de microscope à fluorescence au moyen de ladite carte de valeurs de mise au point automatique à un premier niveau d'exposition se traduisant par une première image acquise à un premier niveau de contraste ;
    l'acquisition d'images supplémentaires de ladite lame de microscope à fluorescence au moyen de ladite carte de valeurs de mise au point automatique, lesdites images étant acquises à des niveaux d'exposition différents les uns des autres et différents de la première exposition, se traduisant par différentes images acquises ayant différents niveaux de contraste ; et
    la formation d'une image composite de ladite lame de microscope à fluorescence par formation d'une somme pondérée des valeurs d'intensité de pixels correspondants de chacune desdites images, ladite image composite ayant un niveau de contraste composite sur l'image composite entière qui représente une moyenne pondérée desdits niveaux de contraste, le poids donné à chacun desdits pixels de chacune desdites images étant calculé à partir d'une mesure de contraste localisé autour de ce pixel.

3.  Procédé de la revendication 1 ou 2 dans lequel un poids supérieur est donné à un pixel dont le contraste localisé est supérieur.

4.  Procédé de la revendication 1 ou 2 dans lequel la mesure de contraste localisé est déterminée sur une sous-zone prédéfinie d'une image comportant ledit pixel.

5.  Procédé de la revendication 4 comprenant en outre la formation d'une image de gamme pour chaque image acquise auxdits niveaux d'exposition, l'image de gamme étant une différence entre le pixel le plus lumineux et le plus sombre dans la sous-zone prédéfinie.

6.  Procédé de la revendication 5 dans lequel ladite image de gamme est traitée pour déterminer ladite mesure de contraste localisé.

7.  Système d'imagerie à fluorescence comprenant :

    une source d'éclairage (25) ;
    un système de microscope ;
    une caméra CCD (32) pour acquérir des images numérisées d'une lame (10) de microscope à fluorescence ;
    une unité informatique (35) pour stocker et traiter lesdites images numérisées, ladite unité informatique étant configurée pour exécuter un procédé de manière à ce que :

        une image de caméra CCD de ladite lame de microscope à fluorescence soit acquise à un premier niveau d'exposition se traduisant par un premier niveau de contraste ;
        des images supplémentaires de ladite lame de microscope à fluorescence soient acquises, chacune à un niveau d'exposition différent des autres et différent de la première exposition, se traduisant par différents niveaux de contraste ;

    le système étant **caractérisé en ce que** ladite unité informatique est configurée pour exécuter un procédé pour que :
    une image composite de ladite lame de microscope à fluorescence soit formée comme une somme pondérée des valeurs d'intensité de pixels correspondants de chacune desdites images, ladite image composite ayant un niveau de contraste composite sur l'image composite entière qui représente une moyenne pondérée desdits niveaux de contraste, le poids donné à chacun desdits pixels de chacune desdites images étant calculé à partir d'une mesure de contraste localisé autour de ce pixel.

8.  Système selon la revendication 7, ledit système de microscope comprenant un système à épifluorescence comprenant :

    un ou plusieurs filtres de longueur d'onde d'excitation (12) ;
    un miroir dichroïque (15) ;
    un système de lentilles pour orienter un faisceau de lumière ;

un ou plusieurs filtres de longueur d'onde d'émission ; et
un objectif de microscope (17).

9. Système selon la revendication 7, ledit système de microscope comprenant un système d'éclairage en lumière transmise comprenant :

   un ou plusieurs filtres de longueur d'onde d'excitation (12) ;
   un miroir (152) ;
   un système de lentilles (155) pour orienter un faisceau de lumière ;
   un ou plusieurs filtres de longueur d'onde d'émission (160) ; et
   un objectif de microscope (17).

10. Système selon la revendication 7 dans lequel un poids supérieur est donné à un pixel dont le contraste localisé est supérieur.

11. Système selon la revendication 7 dans lequel la mesure de contraste localisé est déterminée sur une sous-zone prédéfinie d'une image comportant ledit pixel.

12. Système selon la revendication 11 dans lequel ladite unité informatique exécute un procédé de manière à former une image de gamme pour chaque image acquise auxdits niveaux d'exposition, l'image de gamme étant une différence entre le pixel le plus lumineux et le plus sombre dans la sous-zone prédéfinie.

13. Système selon la revendication 7 dans lequel ladite unité informatique est configurée pour utiliser une carte de valeurs de mise au point automatique pour régler ladite mise au point de la caméra CCD par zone de lame ; ladite carte étant créée par mise au point automatique en exposition multiple à un ou plusieurs points espacés au niveau ou autour d'une ou plusieurs sous-zones à l'intérieur de ladite lame de microscope.

FIGURE 1

FIGURE 2

FIGURE 3

Example of multiple exposure blending.

Images of DAPI stained cells in tissue, captured with exposures of 30ms, 120ms, and 240ms, blended to give a single well contrasted image.

30ms Exposure

120ms Exposure

240ms Exposure

Multiple Exposure Blended Image

FIGURE 4

FIGURE 5

FIGURE 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008019299 A2

- EP 1225756 A